# EUROPEAN PATENT APPLICATION

(11) **EP 2 916 368 A1**
(43) Date of publication of application: **09.09.2015**
(21) Application number: 15157170.0
(22) Date of filing: 02.03.2015
(51) Int. Cl.: H01M 2/10, H01M 2/14, H01M 2/20

(54) **Battery pack**

(30) Priority: 03.03.2014 KR 20140024901
(71) Applicant: Samsung SDI Co., Ltd., Yongin-si, Gyeonggi-do (KR)
(72) Inventor: Ahn, Jang-Gun, Yongin-si, Gyeonggi-do (KR)
(74) Representative: Gulde & Partner

(57) **Abstract**

A battery pack includes a plurality of battery cells each configured to have first and second electrode terminals formed to be exposed to the top thereof, the first and second electrode terminals being made of different kinds of materials. In the battery pack, a first battery cell includes: a first connecting member made of the same kind of material as a first electrode terminal of the first battery cell, the first connecting member having one end bonded to the first electrode terminal of the first battery cell and the other end provided with a fastening hole for electrical connection with a second electrode terminal of a second battery cell adjacent to the first battery cell; and a second connecting member made of the same kind of material as a second electrode terminal of the first battery cell, the second connecting member having one end bonded to the second electrode terminal of the first battery cell and the other end provided with a fastening hole for electrical connection with a first electrode terminal of a third battery cell adjacent to the first battery cell.

## Description

### BACKGROUND

### 1. Field

An aspect of the present invention relates to a battery pack.

### 2. Description of the Related Art

A power supply device includes a battery cell assembly configured with a plurality of battery cells each having a positive electrode at one end thereof and a negative electrode at the other end thereof. The plurality of battery cells are connected in series to each other so as to obtain a required voltage.

In this case, the serial connection between the battery cells is made through a separate connecting member, and the positive electrode of any one of a pair of battery cells adjacent to each other, which belong to the battery cell assembly, is connected to the negative electrode of the other of the pair of battery cells through the connecting member.

Meanwhile, the bonding between the electrode of the battery cell and the connecting member may be made by welding. In this case, the welding between different kinds of metals is not easy. Accordingly, there are problems of a high failure rate and complicated working conditions.

### SUMMARY

Embodiments provide a battery pack which can improve failure rate and facilitate working conditions without any difficulty of welding between different kinds of metals in connection between battery cells.

According to an aspect of the present invention, there is provided a battery pack, including: a plurality of battery cells each configured to have first and second electrode terminals formed to be exposed to the top thereof, the first and second electrode terminals being made of different kinds of materials, wherein a first battery cell includes: a first connecting member made of the same kind of material as a first electrode terminal of the first battery cell, the first connecting member having one end bonded to the first electrode terminal of the first battery cell and the other end provided with a fastening hole for electrical connection with a second electrode terminal of a second battery cell adjacent to the first battery cell; and a second connecting member made of the same kind of material as a second electrode terminal of the first battery cell, the second connecting member having one end bonded to the second electrode terminal of the first battery cell and the other end provided with a fastening hole for electrical connection with a first electrode terminal of a third battery cell adjacent to the first battery cell.

The first connecting member may include a first bonding portion bonded to the top of the first electrode terminal of the first battery cell; a first fastening portion formed to extend toward the second battery cell at the top of the first bonding portion, the first fastening portion including a fastening hole for electrical connection with the second electrode terminal of the second battery cell; and a first connecting portion formed to connect the first bonding portion and the first fastening portion, which exist on different planes from each other.

The second connecting member may include a second bonding portion bonded to the top of the second electrode terminal of the first battery cell; a second fastening portion formed to extend toward the third battery cell at the top of the second bonding portion, the second fastening portion including a fastening hole for electrical connection with the first electrode terminal of the third battery cell; and a second connecting portion formed to connect the second bonding portion and the second fastening portion, which exist on different planes from each other.

The second battery cell may include a second connecting member made of the same kind of material as the second electrode of the second battery cell, the second connecting member having one end bonded to the second electrode terminal of the second battery cell and the other end provided with a fastening hole for electrical connection with the first electrode terminal of the first battery cell. The second connecting member of the second battery cell may include a second bonding portion bonded to the top of the second electrode terminal of the second battery cell; a second fastening portion formed to extend toward the first battery cell at the top of the second bonding portion of the second battery cell, the second fastening portion including a fastening hole for electrical connection with the first electrode terminal of the first battery cell; and a second connecting portion formed to connect the second bonding portion and the second fastening portion of the second battery cell, which exist on different planes from each other. The first fastening portion of the first battery cell may be formed on a plane lower than that of the second fastening portion of the second battery cell.

At least portions of the first fastening portion of the first battery cell and the second fastening portion of the second battery cell may be overlapped with each other in a state in which the centers of their fastening holes correspond to each other.

The third battery cell may include a first connecting member made of the same kind of material as the first electrode terminal of the third battery cell, the first connecting member having one end bonded to the first electrode terminal of the third battery cell and the other end provided with a fastening hole for electrical connection with the second electrode terminal of the first battery cell. The first connecting member of the third battery cell may include a first bonding portion bonded to the top of the first electrode terminal of the third battery cell; a first fastening portion formed to extend toward the first battery cell at the top of the first bonding portion of the third battery cell, the first fastening portion including a fastening hole for electrical connection with the second electrode terminal of the first battery cell; and a first connecting portion formed to connect the first bonding portion and the first fastening portion of the third battery cell, which exist on different planes from each other. The second fastening portion of the first battery cell may be formed on a plane lower than that of the first fastening portion of the third battery cell.

At least portions of the second fastening portion of the first battery cell and the first fastening portion of the third battery cell may be overlapped with each other in a state in which the centers of their fastening holes correspond to each other.

The battery pack may further include a plurality of barriers respectively interposed between the plurality of battery cells.

A first barrier interposed between the first and second battery cells may be provided with a fastening groove which corresponds to the centers of the fastening hole of the first fastening portion of the first battery cell and the fastening hole of the second fastening portion of the second battery cell.

The fastening groove may be a nut.

The fastening hole of the first fastening portion of the first battery cell, the fastening hole of the second fastening portion of the second battery cell, and the nut of the first barrier may be coupled to one another by one bolt.

The bolt may be fastened to the nut of the first barrier through the fastening hole of the first fastening portion of the first battery cell and the fastening hole of the second fastening portion of the second battery cell.

A second barrier interposed between the first and third battery cells may be provided with a fastening groove which corresponds to the centers of the fastening hole of the second fastening portion of the first battery cell and the fastening hole of the first fastening portion of the third battery cell.

The fastening groove may be a nut.

The fastening hole of the second fastening portion of the first battery cell, the fastening hole of the first fastening portion of the third battery cell, and the nut of the second barrier may be coupled to one another by one bolt.

The bolt may be fastened to the nut of the second barrier through the fastening hole of the second fastening portion of the first battery cell and the fastening hole of the first fastening portion of the third battery cell.

The first and second connecting members may be respectively bonded to the first and second electrode terminals of the first battery cell through laser welding.

The first electrode terminal may be made of an aluminum material, and the second electrode terminal may be made of a copper material.

The plurality of battery cells may be arranged in parallel by turns.

According to the present invention, it is possible to improve failure rate and to facilitate working conditions without any difficulty of welding between different kinds of metals in connection between the battery cells.

### BRIEF DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a perspective view showing a battery pack according to an embodiment of the present invention.
FIG. 2 is a perspective view showing a battery cell constituting the battery pack according to the embodiment of the present invention.
FIG. 3 is a perspective view showing a state in which connecting members are bonded to the battery cell of FIG. 2.
FIG. 4 is a perspective view showing a state in which a barrier is coupled to a battery module according to the embodiment of the present invention.
FIG. 5 is a front view showing the state in which the barrier is coupled to the battery module according to the embodiment of the present invention.
FIG. 6A is a perspective view showing the battery modules according to the embodiment of the present invention, FIG. 6B is an enlarged view of the part A of FIG. 6A, FIG. 6C is an enlarged view of the part B of FIG. 6A, and FIG. 6D is a plan view of FIG. 6A.
FIG. 7A is a perspective view showing a state in which the barriers 140a and 140b are coupled to the battery modules according to the embodiment of the present invention, FIG. 7B is an enlarged view of the part A of FIG. 7A, FIG. 7C is an enlarged view of the part B of FIG. 7A, and FIG. 7D is a view solely showing the barriers 140a and 140b of FIG. 7A.

### DETAILED DESCRIPTION

In the following detailed description, only certain exemplary embodiments of the present invention have been shown and described, simply by way of illustration. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

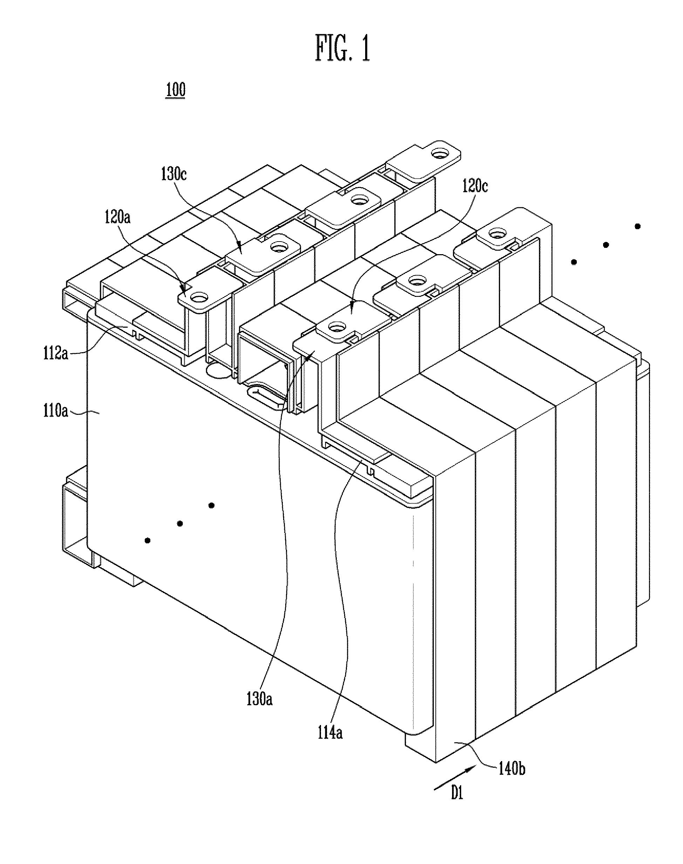

FIG. 1 is a perspective view showing a battery pack 100 according to an embodiment of the present invention.

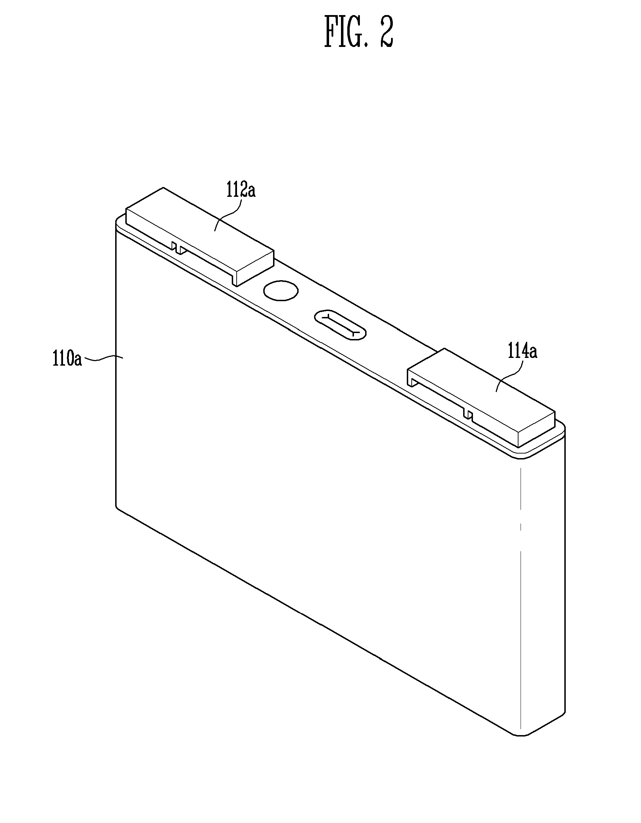

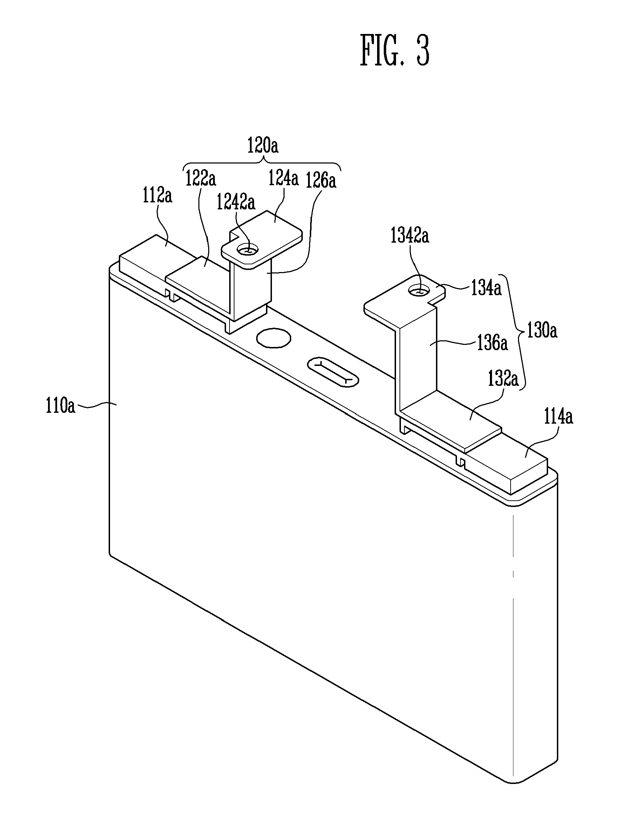

FIG. 2 is a perspective view showing a battery cell 110 constituting the battery pack 100 according to the embodiment of the present invention. FIG. 3 is a perspective view showing a state in which connecting members 120 and 130 are bonded to the battery cell 110 of FIG. 2 (hereinafter, referred to as a 'battery module' for convenience of illustration).

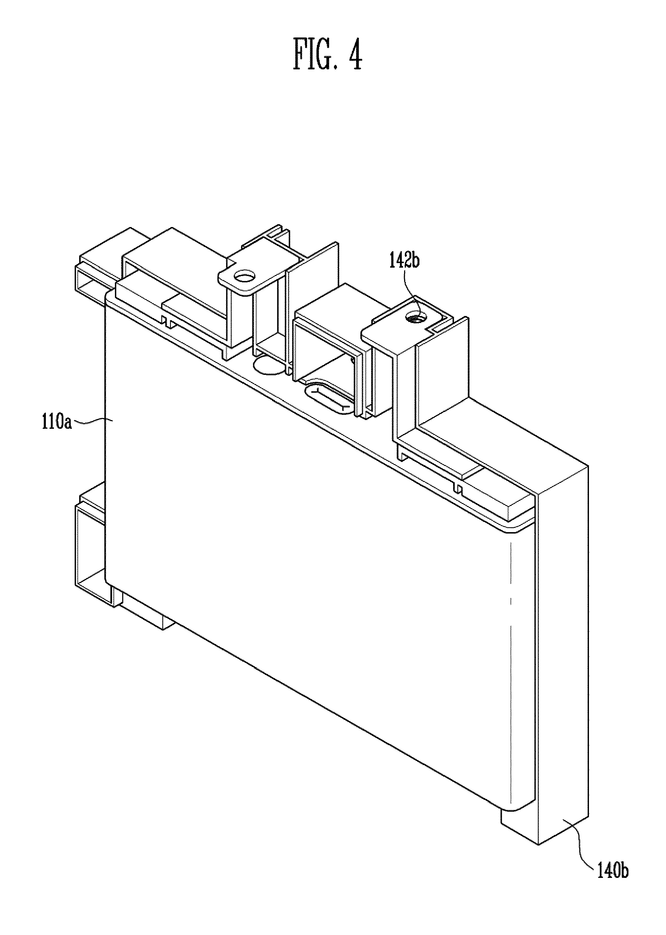

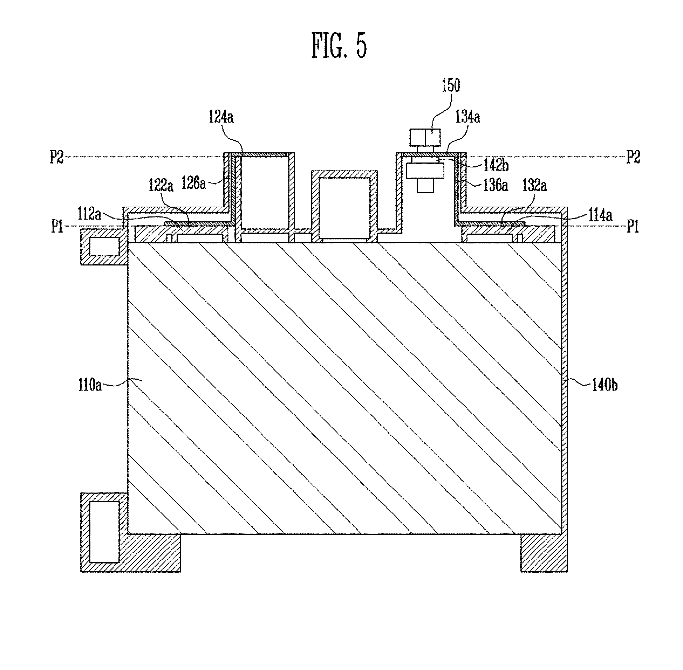

FIG. 4 is a perspective view showing a state in which a barrier 140 is coupled to a battery module 110, 120 or 130 according to the embodiment of the present invention. FIG. 5 is a front view showing the state in which the barrier 140 is coupled to the battery module 110, 120 or 130 according to the embodiment of the present invention.

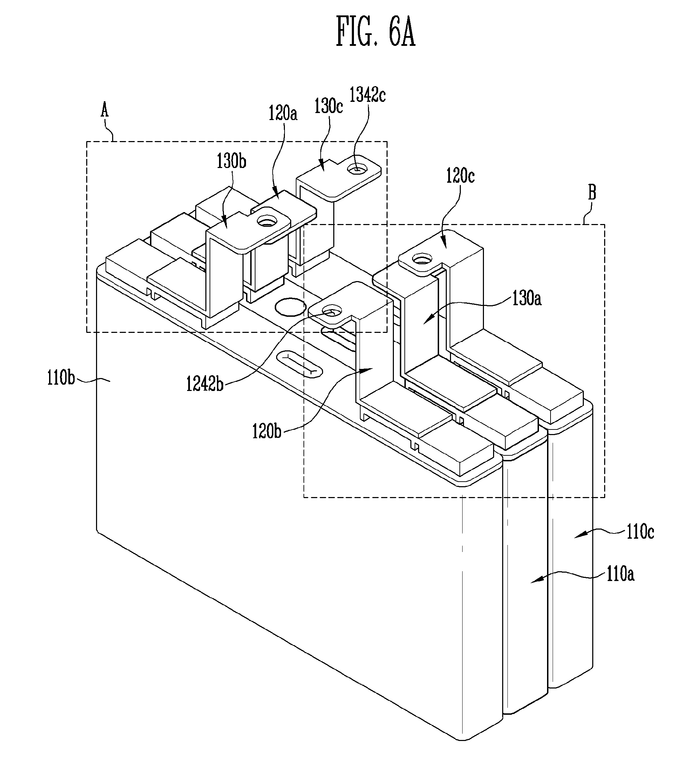

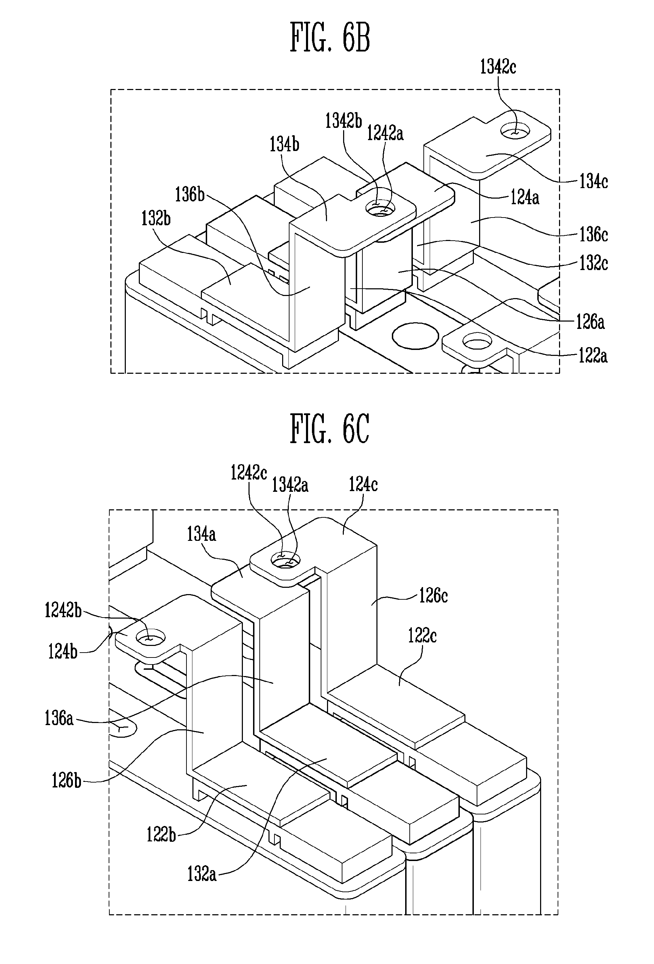

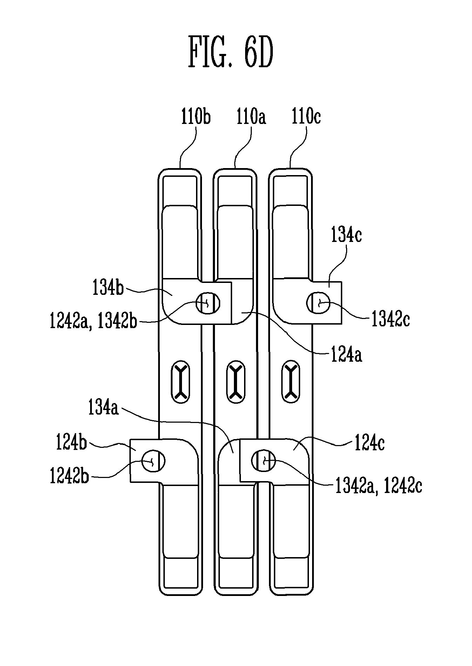

FIG. 6A is a perspective view showing the battery modules according to the embodiment of the present invention, FIG. 6B is an enlarged view of the part A of FIG. 6A, FIG. 6C is an enlarged view of the part B of FIG. 6A, and FIG. 6C is a plan view of FIG. 6A.

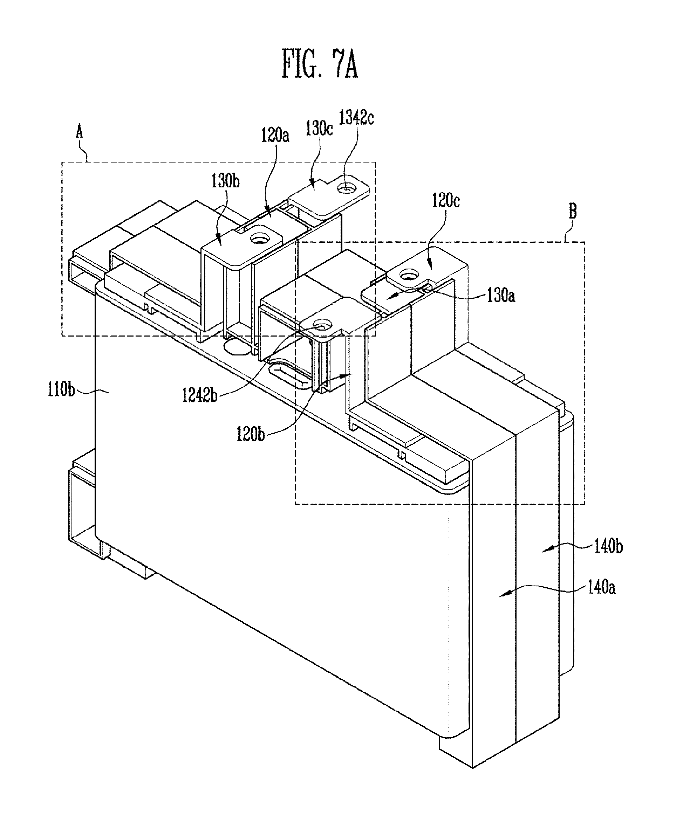

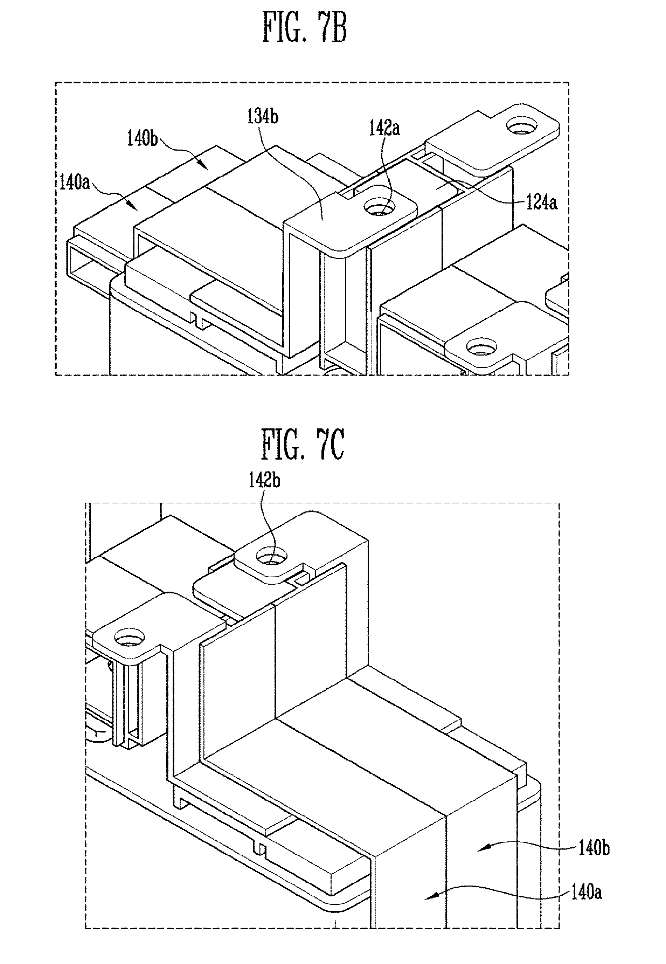

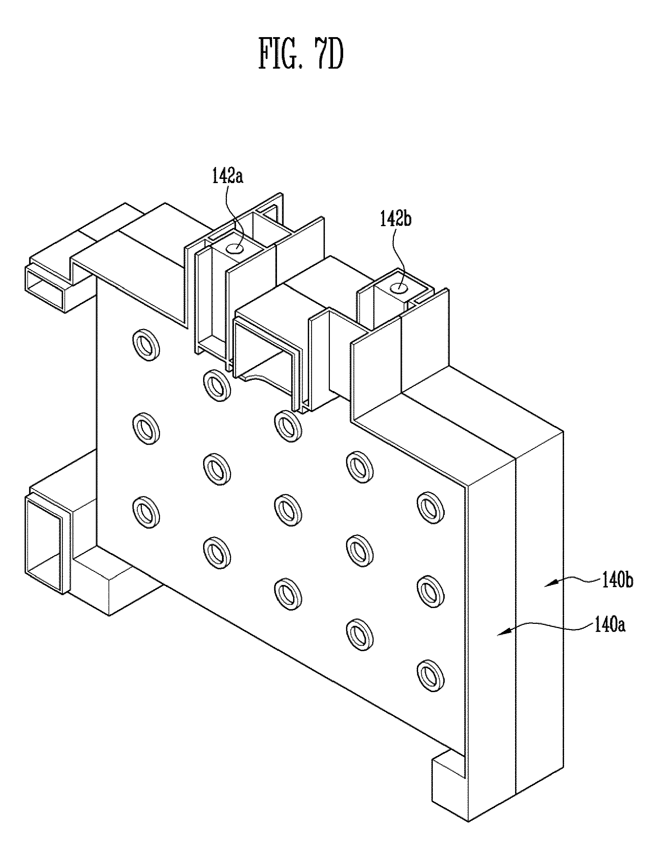

FIG. 7A is a perspective view showing a state in which the barriers 140a and 140b are coupled to the battery modules according to the embodiment of the present invention, FIG. 7B is an enlarged view of the part A of FIG. 7A, FIG. 7C is an enlarged view of the part B of FIG. 7A, and FIG. 7D is a view solely showing the barriers 140a and 140b of FIG. 7A.

First, as shown in FIG. 1, the battery pack 100 according to this embodiment may include a plurality of battery cells 110 each configured to have first and second electrode terminals 112 and 114 formed to be exposed to the top thereof, the first and second electrode terminals 112 and 114 being made of different kind of materials; first and second connecting members 120 and 130 configured to electrically connect the plurality of battery cells 110; and a plurality of barriers 140 respectively interposed between the plurality of battery cells 110.

That is, the plurality of battery cells 110 are arranged in parallel by turns in a first direction D1. The barriers 140 are respectively interposed between the plurality of battery cells 110, and two connecting members 120 and 130 are provided to each battery cell so as to connect the battery cells to each other. For example, the connecting member may be a bus-bar.

In this case, the two connecting members 120 and 130 provided to each battery cell 110 are formed to extend in directions opposite to each other toward adjacent battery cells, so that the serial connection between the battery cells is possible.

For example, the battery cell 110 positioned at the front in FIG. 1 is referred to as a first battery cell 110a. Although not shown in FIG. 1, the battery cell to be disposed further forward than the first battery cell 110a is referred to as a second battery cell 110b to be connected in series to the first battery cell 110a, and the battery cell disposed further backward than the first battery cell 110a is referred to as a third battery cell 110c. Here, a first connecting member 120a of two connecting members 120a and 130a provided to the first battery cell 110a may be connected to a second connecting member 130b of two connecting members 120b and 130b, which is formed to extend toward the second battery cell 110b adjacent to the first battery cell 110a to be provided to the second battery cell 120b.

In this case, the second connecting member 130b of the second battery cell 110b is also formed to extend toward the first battery cell 110a adjacent to the second battery cell 110b, and a first connecting member 120b is formed to extend toward another battery cell adjacent to the second battery cell 110b.

On the contrary to the first connecting member 120a of the first battery cell 110a, a second connecting member 130a is formed to extend toward the third battery cell 110c adjacent to the first battery cell 110a. Therefore, the second connecting member 130a may be connected to a first connecting member 120c of two connecting members 120c and 130c provided to the third battery cell 110c.

In this case, the first connecting member 120c of the third battery cell 110c is also formed to extend toward the first battery cell 110a adjacent to the third battery cell 110c, and a second connecting member 130c of the third battery cell 110c is formed to extend toward another battery cell adjacent to the third battery cell 110c.

As such, as the two connecting members 120 and 130 provided to each battery cell are formed to extend in directions opposite to each other toward adjacent battery cells, the bolt fastening between the connecting members opposite to each other is possible in the serial connection between the battery cells.

That is, the first connecting member 120a of the first battery cell 110a and the second connecting member 130b of the second battery cell 110b, which are opposite to each other, can be bolt-fastened to each other, and the second connecting member 130a of the first battery cell and the first connecting member 120c of the third battery cell, which are opposite to each other, can be bolt-fastened to each other.

The two connecting members 120 and 130 provided to each battery cell 110 are respectively bonded to the electrode terminals of the battery cell so as to be firmly fixed. The bonding, for example, may be performed through laser welding.

For example, according to an embodiment of the present invention, one end of each of the two connecting members 120 and 130 provided to each battery cell 110 is bonded to the electrode terminal through laser welding, and the other end of the connecting member is coupled to the connecting member of an adjacent battery cell through bolt fastening.

Accordingly, in the connection between the battery cells 110 having a molding terminal structure shown in FIG. 2, as shown in FIG. 3, the copper connecting member 120 made of the same kind of material as the negative electrode terminal 112 is welded to the negative electrode 112 made of a copper material, and the aluminum connecting member 130 made of the same kind of material as the positive electrode 114 is welded to the positive electrode 114 made of an aluminum material. Then, as shown in FIG. 1, the two connecting members opposite to each other between the adjacent battery cells are bolt-fastened to each other, thereby finally constituting the battery pack 100.

Thus, according to the present invention, it is possible to facilitate working conditions without any difficulty in the welding between different kinds of metals and to improve failure rate.

Hereinafter, the battery pack 100 according to this embodiment will be described in detail with reference to FIGS. 1 to 7. For convenience of illustration, the first battery cell 110a positioned at the front in FIG. 1, the first and second connecting members 120a and 130a provided to the first battery cell 110a, and a first barrier 140a interposed between the first and third battery cells 110a and 110c will be mainly described. However, the present invention is not limited thereto, and the same description is applicable to the other battery cells.

First, as shown in FIGS. 2 and 3, the first connecting member 120a provided to the first battery cell 110a includes a first bonding portion 122a bonded to the top of the first electrode terminal 112a of the first battery cell 110a; a first fastening portion 124a formed to extend toward the second battery cell 110b from the top of the first bonding portion 122a, the first fastening portion 124a including a fastening hole 1242a for electrical connection with the second electrode terminal 114b of the second battery cell 110b; and a first connecting portion 126a formed to connect the first bonding portion 122a and the first fastening portion 124a, which exist on different planes from each other.

For example, the first bonding portion 122a may be positioned on a first plane P1 parallel to the plane on which the first electrode terminal 112a is placed, and the first fastening portion 124a may be positioned on a second plane P2 parallel to the first plane P1 above the first plane P1.

Similarly, the second connecting member 130a provided to the first battery cell 110a includes a second bonding portion 132a bonded to the top of the second electrode terminal 114a of the first battery cell 110a; a second fastening portion 134a formed to extend toward the third battery cell 110c at the top of the second bonding portion 132a, the second fastening portion 134a including a fastening hole 1342a for electrical connection with the first electrode terminal 112c of the third battery cell 110c; and a second connecting portion 136a formed to connect the second bonding portion 132a and the second fastening portion 134a, which exist on different planes from each other.

For example, the second bonding portion 132a may be positioned on the first plane P1 parallel to the plane on which the second electrode terminal 114a is placed, and the second fastening portion 134a may be positioned on the second plane P2 parallel to the first plane P1 above the first plane P1.

In this case, the first and second electrode terminals 112a and 114a are preferably placed on the same plane. On the whole, the first and second bonding portions 122a and 132a are also placed on the same plane P1, and the first and second fastening portions 124a and 134a are also placed on the same plane P2.

Similarly to the first battery cell 110a, the second battery cell (as described above, although not shown in these figures, its reference numeral is designated by 110b for convenience of illustration) adjacent to the first battery cell 110a may include a second connecting member 130b made of the same kind of material as the second electrode terminal 114b of the second battery cell 110b, the second connecting member 130b having one end bonded to the second electrode terminal 114b of the second battery cell 110b and the other end provided with a fastening hole for electrical connection with the first electrode terminal 112a of the first battery cell 110a.

More specifically, the second connecting member 130b provided to the second battery cell 110b includes a second bonding portion 132b bonded to the top of the second electrode terminal 114b of the first battery cell 110b; a second fastening portion 134b formed to extend toward the first battery cell 110a at the top of the second bonding portion 132b, the second fastening portion 134b including a fastening hole 1342b for electrical connection with the first electrode terminal 112a of the first battery cell 110a; and a second connecting portion 136b formed to connect the second bonding portion 132b and the second fastening portion 134b, which exist on different planes from each other.

For example, the second bonding portion 132b may be positioned on the first plane P1 parallel to the plane on which the second electrode terminal 114b is placed, and the second fastening portion 134b may be positioned on a third plane P3 parallel to the first plane P1 above the first plane P1.

According to an embodiment of the present invention, in the serial connection between the adjacent battery cells 110a and 110b, the first fastening portion 124a of the first battery cell 110a may be formed on a plane lower than that of the second fastening portion 134b of the second battery cell 110b in order to perform the bolt fastening between the connecting members opposite to each other.

That is, the plane P2 on which the first fastening portion 124a of the first battery cell 110a is placed may be lower than the plane P3 on which the second fastening portion 134b of the second battery cell 110b is placed.

Accordingly, at least portions of the first fastening portion 124a of the first battery cell 110a and the second fastening portion 134b of the second battery cell 110b may be overlapped with each other in a state in which the centers of their fastening holes 1242a and 1342b correspond to each other. As a result, the bolt fastening between the connecting members 120a and 130b opposite to each other is possible.

Meanwhile, the second battery cell 110b may also include a first connecting member 120b, and the first connecting member 120 has the same structure as the first connecting member 120c of the third battery cell 110c. Therefore, its detailed description will be substituted with the following descriptions.

The third battery cells 110c adjacent to the first battery cell 110a in the first direction D1 may also include a first connecting member 120c made of the same kind of material as the first electrode terminal 112c of the third battery cell 110c, the first connecting member 120c having one end bonded to the first electrode terminal 112c of the third battery cell 110c and the other end provided with a fastening hole for electrical connection with the second electrode terminal 114a of the first battery cell 110a.

More specifically, the first connecting member 120c provided to the third battery cell 110c includes a first bonding portion 122c bonded to the top of the first electrode terminal 112c of the third battery cell 110c; a first fastening portion 124c formed to extend toward the first battery cell 110a at the top of the first bonding portion 122c, the first fastening portion 124c including a fastening hole 1242c for electrical connection with the second electrode terminal 114a of the first battery cell 110a; and a first connecting portion 126c formed to connect the first bonding portion 122c and the first fastening portion 124c, which exist on different planes from each other.

For example, the first bonding portion 122c may be positioned on the first plane P1 parallel to the plane on which the first electrode terminal 112c is placed, and the first fastening portion 124c may be positioned on the third plane P3 parallel to the first plane P1 above the first plane P1.

In this case, as described above, in the serial connection between the adjacent battery cells, the second fastening portion 134a of the first battery cell 110a may be formed on a plane lower than that of the first fastening portion 124c of the third battery cell 110c in order to perform the bolt fastening between the connecting members opposite to each other.

That is, the plane P2 on which the second fastening portion 134a of the first battery cell 110a is placed may be lower than the plane P3 on which the first fastening portion 124c of the third battery cell 110c.

Accordingly, at least portions of the second fastening portion 134a of the first battery cell 110a and the first fastening portion 124c of the third battery cell 110c may be overlapped with each other in a state in which the centers of their fastening holes 1342a and 1242c correspond to each other. As a result, the bolt fastening between the connecting members 130a and 120c opposite to each other is possible.

For example, the fastening portions 124a and 134a of the connecting member provided to the first battery cell are formed on a plane lower than that of the first and second fastening portions 124c and 134b of the connecting members provided to the adjacent battery cells, so that the bolt fastening between the connecting members opposite to each other is possible in the serial connection between the battery cells.

Meanwhile, the third battery cell 110c may also include a second connecting member 130c, and the second connecting member 130c has the same structure as the second connecting member 130b of the second battery cell 110b described above. Therefore, its detailed description will be omitted.

Continuously, as shown in FIGS. 1 to 5, the first barrier (although not shown in these figures, its reference numeral is designated by 140a for convenience of illustration) interposed between the first and second battery cells 110a and 110b may be provided with a fastening groove 142a which corresponds to the centers of the fastening hole 1242a of the first fastening portion of the first battery cell and the fastening hole 1342b of the second fastening portion of the second battery cell.

According to an embodiment of the present invention, the fastening groove 142a may be a nut, and the fastening hole 1242a of the first fastening portion of the first battery cell, the fastening hole 1342b of the second fastening portion of the second battery cell, and the nut 142a of the first barrier may be coupled to one another by one bolt 150.

In this case, the bolt 150 is fastened to the nut 142a of the first barrier through the fastening hole 1242a of the first fastening portion of the first battery cell and the fastening hole 1342b of the second fastening portion of the second battery cell.

In the same manner, a second barrier 140b interposed between the first and third battery cells 110a and 110c may be provided with a fastening groove 142b which corresponds to the centers of the fastening hole 1342a of the second fastening portion of the first battery cell and the fastening hole 1242c of the first fastening portion of the third battery cell.

For example, the fastening groove 142b may be a nut, and the fastening hole 1342a of the second fastening portion of the first battery cell, the fastening hole 1242c of the first fastening portion of the third battery cell, and the nut 142b of the second barrier may be coupled to one another by another bolt 150.

In this case, the bolt is fastened to the nut 142b of the second barrier through the fastening hole 1342a of the second fastening portion of the first battery cell and the fastening hole 1242c of the first fastening portion of the third battery cell.

According to the present invention, a module structure is made by previously welding a connecting member made of the same material to each battery cell, using laser, and then stacking the connecting members, and the connecting members are then assembled using a bolt, so that it is possible to simplify work. When a welding failure occurs, only a corresponding cell is removed, so that it is possible to minimize loss caused by the welding failure.

It is clear for a person skilled in the art that the disclosed embodiments can also be combined where possible.

## Claims

1. A battery pack (100), comprising:
a plurality of battery cells (110) each configured to have first and second electrode terminals (112, 114) formed to be exposed to the top thereof, the first and second electrode terminals (112,114) being made of different kinds of materials,
wherein a first battery cell (110a) includes:
a first connecting member (120a) made of the same kind of material as a first electrode terminal (112a) of the first battery cell (110a), the first connecting member (120a) having one end bonded to the first electrode terminal (112a) of the first battery cell (110a) and the other end provided with a fastening hole (1242a) for electrical connection with a second electrode terminal (114b) of a second battery cell (110b) adjacent to the first battery cell (110a); and
a second connecting member (130a) made of the same kind of material as a second electrode terminal (114a) of the first battery cell (110a), the second connecting member (130a) having one end bonded to the second electrode terminal (114a) of the first battery cell (110a) and the other end provided with a fastening hole for electrical connection with a first electrode terminal (112c) of a third battery cell (110c) adjacent to the first battery cell (110a).

2. The battery pack of claim 1, wherein the first connecting member (120a) includes:
a first bonding portion (122a) bonded to the top of the first electrode terminal (112a) of the first battery cell (110a);
a first fastening portion (124a) formed to extend toward the second battery cell (110b) at the top of the first bonding portion (122a), the first fastening portion (124a) including a fastening hole (1242a) for electrical connection with the second electrode terminal (114b) of the second battery cell (110b); and
a first connecting portion (126a) formed to connect the first bonding portion (122a) and the first fastening portion (124a), which exist on different planes from each other.

3. The battery pack of claim 1 or 2, wherein the second connecting member (130a) includes:
a second bonding portion (132a) bonded to the top of the second electrode terminal (114a) of the first battery cell (110a);
a second fastening portion (134a) formed to extend toward the third battery cell (110c) at the top of the second bonding portion (132a), the second fastening portion (134a) including a fastening hole (1342a) for electrical connection with the first electrode terminal (112c) of the third battery cell (110c); and
a second connecting portion (136a) formed to connect the second bonding portion (132a) and the second fastening portion (134a), which exist on different planes from each other.

4. The battery pack of one of preceding claims, wherein the second battery cell (110b) includes a second connecting member (130b) made of the same kind of material as the second electrode terminal (114b) of the second battery cell (110b), the second connecting member (130b) having one end bonded to the second electrode terminal (114b) of the second battery cell (110b) and the other end provided with a fastening hole for electrical connection with the first electrode terminal (112a) of the first battery cell (110a),
wherein the second connecting member (130b) of the second battery cell (110b) includes:
a second bonding portion (132b) bonded to the top of the second electrode terminal (114b) of the second battery cell (110b);
a second fastening portion (134b) formed to extend toward the first battery cell (110a) at the top of the second bonding portion (132b) of the second battery cell (130b), the second fastening portion (134b) including a fastening hole (1342b) for electrical connection with the first electrode terminal (112a) of the first battery cell (110a); and
a second connecting portion (136b) formed to connect the second bonding portion (132b) and the second fastening portion (134b) of the second battery cell (110b), which exist on different planes from each other, and
wherein the first fastening portion (124a) of the first battery cell (110a) is formed on a plane lower than that of the second fastening portion (134b) of the second battery cell (110b).

5. The battery pack of claim 4, wherein at least portions of the first fastening portion (124a) of the first battery cell (110a) and the second fastening portion (134b) of the second battery cell (110b) are overlapped with each other in a state in which the centers of their fastening holes (1342a, 1342b) correspond to each other.

6. The battery pack of one of preceding claims, wherein the third battery cell (110c) includes a first connecting member (120c) made of the same kind of material as the first electrode terminal (112c) of the third battery cell (110c), the first connecting member (120c) having one end bonded to the first electrode terminal (112c) of the third battery cell (110c) and the other end provided with a fastening hole for electrical connection with the second electrode terminal (114a) of the first battery cell (110a),
wherein the first connecting member (120c) of the third battery cell (110c) includes:
a first bonding portion (122c) bonded to the top of the first electrode terminal (112c) of the third battery cell (110c);
a first fastening portion (124c) formed to extend toward the first battery cell (110a) at the top of the first bonding portion (122c) of the third battery cell (110c), the first fastening portion (124c) including a fastening hole (1242c) for electrical connection with the second electrode terminal (114a) of the first battery cell (110a) ; and
a first connecting portion (126c) formed to connect the first bonding portion (122c) and the first fastening portion (124c) of the third battery cell (110c), which exist on different planes from each other, and
wherein the second fastening portion (134a) of the first battery cell (110a) is formed on a plane lower than that of the first fastening portion (124c) of the third battery cell (110c).

7. The battery pack of claim 6, wherein at least portions of the second fastening portion (134a) of the first battery cell (110a) and the first fastening portion (124c) of the third battery cell (110c) are overlapped with each other in a state in which the centers of their fastening holes (1342a, 1242c) correspond to each other.

8. The battery pack of one of preceding claims, further comprising a plurality of barriers respectively interposed between the plurality of battery cells.

9. The battery pack of claim 8, wherein a first barrier (140a) interposed between the first and second battery cells (110a, 110b) is provided with a fastening groove (142a) which corresponds to the centers of the fastening hole (1242a) of the first fastening portion of the first battery cell (110a) and the fastening hole (1342b) of the second fastening portion of the second battery cell (110b), and/or. wherein the fastening groove (142a) is a nut.

10. The battery pack of claim 9, wherein the fastening hole (1242a) of the first fastening portion of the first battery cell (110a), the fastening hole (1342b) of the second fastening portion of the second battery cell (110b), and the nut (142a) of the first barrier (140a) are coupled to one another by one bolt(150), and/or
wherein the bolt (150) is fastened to the nut (142a) of the first barrier (140a) through the fastening hole (1242a) of the first fastening portion of the first battery cell (110a) and the fastening hole (1342b) of the second fastening portion of the second battery cell (110b).

11. The battery pack of claim 8, wherein a second barrier (140b) interposed between the first and third battery cells (110a, 110c) is provided with a fastening groove (142b) which corresponds to the centers of the fastening hole (1342a) of the second fastening portion of the first battery cell (110a) and the fastening hole (1242c) of the first fastening portion of the third battery cell (110c), and/or
wherein the fastening groove is a nut (142b).

12. The battery pack of claim 11, wherein the fastening hole (1342a) of the second fastening portion of the first battery cell (110a), the fastening hole (1242c) of the first fastening portion of the third battery cell (110c), and the nut (142b) of the second barrier (140b) are coupled to one another by one bolt (150), and/or
wherein the bolt (150)r is fastened to the nut (142b) r of the second barrier (140b) through the fastening hole (1342a) of the second fastening portion of the first battery cell (110a) and the fastening hole (1242c) of the first fastening portion of the third battery cell (110c).

13. The battery pack of one of preceding claims, wherein the first and second connecting members (120a, 130a) of the first battery cell (110a) are respectively bonded to the first and second electrode terminals (112a, 114a) of the first battery cell (110a) through laser welding.

14. The battery pack of one of preceding claims, wherein the first electrode terminal (12) is made of an aluminum material, and the second electrode terminal (14) is made of a copper material.

15. The battery pack of one of preceding claims, wherein the plurality of battery cells are arranged in parallel by turns.
